# EUROPEAN PATENT APPLICATION

(11) **EP 4 693 612 A1**
(43) Date of publication of application: **11.02.2026**
(21) Application number: 25183551.8
(22) Date of filing: 18.06.2025
(51) Int. Cl.: H01M 10/613, H01M 10/625, H01M 10/6555, H01M 10/6557, H01M 10/6568, H01M 50/204, H01M 50/249, H01M 50/264, H01M 50/289

(54) **POWER STORAGE DEVICE**

(30) Priority: 07.08.2024 JP 2024130941
(71) Applicant: TOYOTA JIDOSHA KABUSHIKI KAISHA, Toyota-shi, Aichi-ken 471-8571 (JP)
(72) Inventor: GOITSUKA, Shinya, Toyota-shi, 471-8571 (JP)
(74) Representative: TBK

(57) **Abstract**

A power storage device (100) comprises: a power storage unit (110); a cooling pipe (41) that passes refrigerant; a cooling unit (R) that cools the power storage unit (110) with the refrigerant; an accommodation case (90) that includes an upper case (91) and a lower case (92) disposed below the upper case (91) and accommodates the power storage unit (110); and a bracket (70) that is secured to the lower case (92) and secures the power storage unit (110). The bracket (70) has a pipe insertion port (76) that receives the cooling pipe (41), and a unit insertion port (75) that receives the cooling unit (R). The bracket (70) internally has a channel (750) that passes the refrigerant. The channel (750) interconnects the pipe insertion port (76) and the unit insertion port (75).

## Description

### CROSS REFERENCE TO RELATED APPLICATIONS

This nonprovisional application is based on Japanese Patent Application No. 2024-130941 filed on August 7, 2024 with the Japan Patent OFFICE, the entire contents of which are hereby incorporated by reference.

### BACKGROUND

### Field

The present disclosure relates to a power storage device.

### Description of the Background Art

For example, Japanese National Patent Publication No. 2024-508504 discloses a battery pack (a power storage device) comprising a battery module, a heat sink (a cooler), a pack refrigerant pipe (a cooling pipe) directly coupled to the heat sink and passing refrigerant, a pack frame (a lower case), and a pack cover (an upper case).

### SUMMARY

When the pack refrigerant pipe (the cooling pipe) and the heat sink (the cooler) are directly coupled together, and the cooler is mounted at a position offset from a predetermined designed position, the cooling pipe is adjusted in length or mounted at an adjusted position to be coupled to the cooler. This is cumbersome for a person who assembles the cooling pipe, and there is a demand for better assemblability for the cooling pipe.

An object of the present disclosure is to provide better assemblability for a cooling pipe.
(1) In one aspect of the present disclosure, a power storage device comprises: a power storage unit; a cooling pipe that passes refrigerant; a cooling unit that cools the power storage unit with the refrigerant; an accommodation case that includes an upper case and a lower case disposed below the upper case and accommodates the power storage unit; and a securing member that is secured to the lower case and secures the power storage unit. The securing member has a pipe insertion port that receives the cooling pipe and a unit insertion port that receives the cooling unit. The securing member internally has a channel that passes the refrigerant. The channel interconnects the pipe insertion port and the unit insertion port.
(2) In the power storage device according to item (1) above, the power storage unit includes a power storage module. The power storage module includes a lower module and an upper module disposed above the lower module. The cooling unit is disposed between the lower module and the upper module. (3) In the power storage device according to item (2) above, the securing member couples the lower module and the upper module together.
(4) In the power storage device according to item (1) above, the power storage unit includes a first power storage module and a second power storage module horizontally adjacent to the first power storage module. The cooling unit includes a first cooler that cools the first power storage module with the refrigerant, and a second cooler that cools the second power storage module with the refrigerant. The unit insertion port includes a first insertion port that receives the first cooler and a second insertion port that receives the second cooler. The channel includes a first channel that interconnects the pipe insertion port and the first insertion port, and a second channel that branches from the first channel at a branching point located on the first channel and interconnects the branching point and the second insertion port.
(5) In the power storage device according to item (4) above, the first power storage module includes a first lower module and a first upper module disposed above the first lower module. The second power storage module includes a second lower module and a second upper module disposed above the second lower module. The first cooler is disposed between the first lower module and the first upper module. The second cooler is disposed between the second lower module and the second upper module.
(6) In the power storage device according to item (5) above, the securing member couples the first lower module and the first upper module together and couples the second lower module and the second upper module together. (7) In the power storage device according to any one of items (1) to (6) above, the cooling unit is welded to the securing member.

The foregoing and other objects, features, aspects and advantages of the present disclosure will become apparent from the following detailed description of the present disclosure when taken in conjunction with the accompanying drawings.

### BRIEF DESCRIPTION OF THE DRAWINGS

Fig. 1 is a schematic side view of a vehicle comprising a power storage device according to an embodiment of the present disclosure.
Fig. 2 is a schematic exploded perspective view of a power storage device 100 shown in Fig. 1.
Fig. 3 shows an interior of power storage device 100, as viewed from above power storage device 100, with an upper case 91 removed therefrom.
Fig. 4 is a cross section taken along a line IV-IV indicated in Fig. 3.
Fig. 5 is a cross section taken along a line V-V indicated in Fig. 3.
Fig. 6 is a cross section taken along a line VI-VI indicated in Fig. 3.
Fig. 7 is a cross section taken along a line VII-VII indicated in Fig. 3.
Fig. 8 is a schematic perspective view of a cooler 30, brackets 60 and 70, and cooling pipes 41 and 42.
Fig. 9 is a cross section taken along a line IX-IX indicated in Fig. 3.
Fig. 10 is a cross section taken along a line X-X indicated in Fig. 3.
Fig. 11 is a cross section taken along a line XI-XI indicated in Fig. 3.
Fig. 12 is a cross section taken along a line XII-XII indicated in Fig. 3.
Fig. 13 is a plan view schematically showing a path passing refrigerant.
Fig. 14 is a cross section taken along a line XIV-XIV indicated in Fig. 3.

### DESCRIPTION OF THE PREFERRED EMBODIMENTS

Hereinafter, embodiments according to the present disclosure will be described with reference to the drawings. In the following description, identical parts and components are identically denoted. Their names and functions are also identical. Accordingly, they will not be described repeatedly in detail.

### [Embodiments]

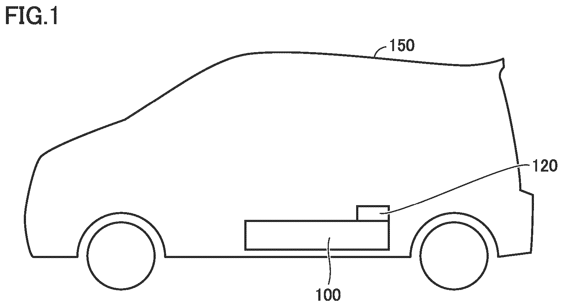

A power storage device according to an embodiment of the present disclosure will now be described with reference to Figs. 1 to 14.

Fig. 1 is a schematic side view of a vehicle comprising a power storage device according to an embodiment of the present disclosure. A power storage device 100 according to one embodiment of the present disclosure is mounted in a vehicle 150. Vehicle 150 travels using power stored in power storage device 100. Examples of vehicle 150 may include a hybrid electric vehicle, a plug-in hybrid electric vehicle, a fuel cell electric vehicle, and a battery electric vehicle. Power storage device 100 is disposed below a floor panel of vehicle 150.

Vehicle 150 includes a device unit 120. Device unit 120 for example includes an electronic control unit and a junction box.

Note that power storage device 100 is not limited in application to vehicular applications. Power storage device 100 may be mounted in a device other than a vehicle and may store power for driving the device.

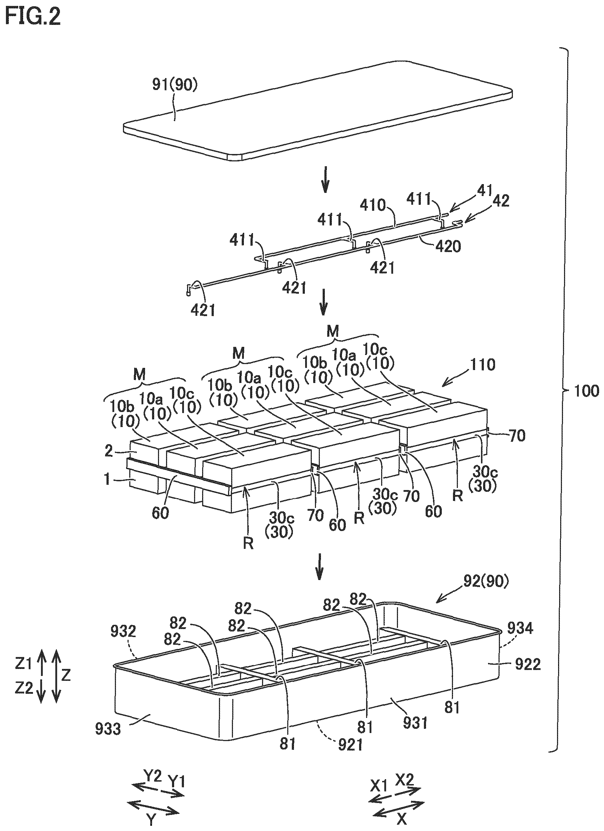

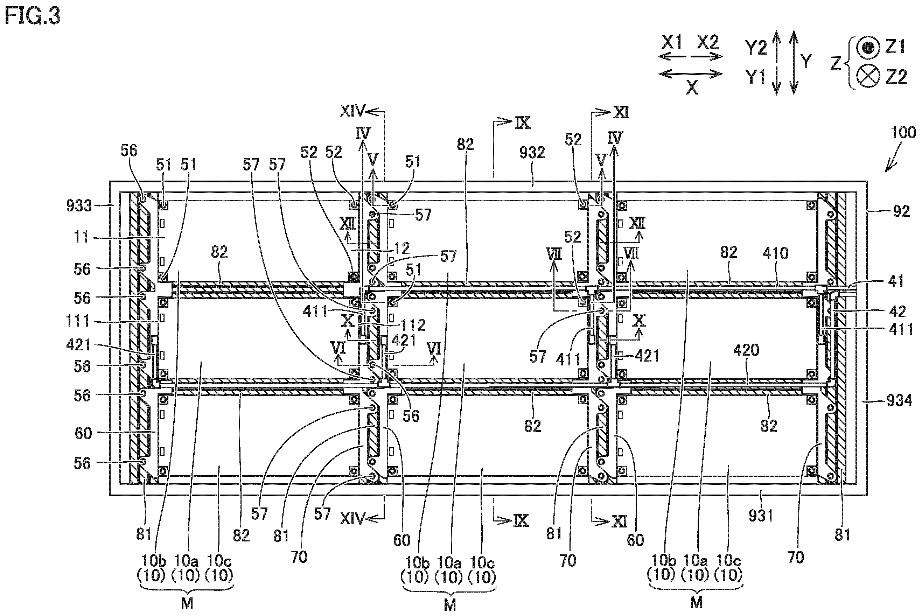

Fig. 2 is an exploded schematic perspective view of power storage device 100 shown in Fig. 1. Fig. 3 shows an interior of power storage device 100, as viewed from above power storage device 100, with an upper case 91 removed therefrom. **In** Fig. 3, reinforcement members 81 and 82 are hatched in order to make the drawing easy to see.

In the present disclosure, a direction X, a direction Y, and a direction Z are orthogonal to one another. For example, the direction X is a longitudinal direction of vehicle 150 (see Fig. 1), and the direction Y is a lateral direction of vehicle 150. A direction X1 is a direction from a rear side of vehicle 150 toward a front side of vehicle 150. A direction X2 is a direction from the front side of vehicle 150 toward the rear side of vehicle 150. A direction Y1 is a direction from a right side of vehicle 150 toward a left side of vehicle 150. A direction Y2 is a direction from the left side of vehicle 150 toward the right side of vehicle 150. The direction Z is an upward/downward (or vertical) direction. A direction Z1 is a direction from a lower side of vehicle 150 toward an upper side of vehicle 150. A direction Z2 is a direction from the upper side of vehicle 150 toward the lower side of vehicle 150. In the present disclosure, the direction Z1 is also referred to as being above or an upper side, and the direction Z2 is also referred to as being below or a lower side.

Referring to Figs. 2 and 3, power storage device 100 according to the present embodiment is for example a battery pack. Power storage device 100 comprises an accommodation case 90, a plurality of reinforcement members 81, a plurality of reinforcement members 82, a power storage unit 110, a plurality of cooling units R, cooling pipes 41 and 42, a plurality of brackets 60, and a plurality of brackets 70. Brackets 60 and 70 are each an example of a "securing member" in the present disclosure.

Accommodation case 90 accommodates the plurality of reinforcement members 81, the plurality of reinforcement members 82, power storage unit 110, the plurality of cooling units R, cooling pipes 41 and 42, the plurality of brackets 60, and the plurality of brackets 70. More specifically, accommodation case 90 includes upper case 91 and a lower case 92. Lower case 92 is disposed below upper case 91. The plurality of reinforcement members 81, the plurality of reinforcement members 82, power storage unit 110, the plurality of cooling units R, cooling pipes 41 and 42, the plurality of brackets 60, and the plurality of brackets 70 are accommodated in a space formed by upper case 91 and lower case 92.

Lower case 92 includes a bottom wall 921 and a peripheral wall 922. Peripheral wall 922 stands erect from a peripheral portion of bottom wall 921. Peripheral wall 922 is formed generally in a quadrangular prism. Peripheral wall 922 includes side walls 931 to 934. Side wall 931 and side wall 932 are spaced from each other in the direction Y. Side wall 931 is disposed on a side Y1 with respect to side wall 932. Side wall 933 and side wall 934 are spaced from each other in the direction X. Side wall 933 is disposed on a side X1 with respect to side wall 934.

Reinforcement member 81 and reinforcement member 82 are provided at lower case 92. Reinforcement members 81 and 82 each project upward from bottom wall 921 of lower case 92. Reinforcement members 81 and 82 are each secured (e.g., fastened or welded) to bottom wall 921. Reinforcement members 81 and 82 are each a plate-shaped member of metal for example.

In the present embodiment, the plurality of reinforcement members 81 include four reinforcement members 81. The four reinforcement members 81 are spaced in the direction X. The four reinforcement members 81 each extend in the direction Y. Reinforcement member 81 is not limited to four in number. One or more reinforcement members 81 may be provided at lower case 92.

In the present embodiment, the plurality of reinforcement members 82 include six reinforcement members 82. More specifically, two reinforcement members 82 are disposed between reinforcement members 81 aligned in the direction X such that the two reinforcement members 82 are spaced in the direction Y. The six reinforcement members 82 each extend in the direction X. Reinforcement member 82 is not limited to six in number. One or more reinforcement members 82 may be provided at lower case 92.

The plurality of reinforcement members 81 and 82 partition accommodation case 90 to internally have an accommodation space divided into a plurality of spaces (nine spaces in the present embodiment). The nine spaces each have a single power storage module 10 disposed therein.

Power storage unit 110 includes a plurality of power storage modules 10. In the present embodiment, the plurality of power storage modules 10 include nine power storage modules 10. Power storage module 10 is not limited to nine in number. Power storage unit 110 may include one or more power storage modules 10.

The nine power storage modules 10 are disposed in a 3 x 3 matrix in the XY plane. Specifically, three power storage modules 10 aligned in the direction Y form a row of modules M, and three such rows of modules M are aligned in the direction X.

Row of modules M includes a first power storage module 10a, a second power storage module 10b, and a third power storage module 10c. First power storage module 10a is power storage module 10 disposed at a center of the three power storage modules 10 of row of modules M. Second power storage module 10b is power storage module 10 disposed closest to a side Y2 among the three power storage modules 10 of row of modules M. Third power storage module 10c is power storage module 10 disposed closest to the side Y1 among the three power storage modules 10 of row of modules M. Second power storage module 10b and first power storage module 10a are adjacent to each other in a horizontal direction, and first power storage module 10a and third power storage module 10c are adjacent to each other in the horizontal direction.

Each power storage module 10 includes a side surface 111 and a side surface 112 that are spaced from each other in the direction X. Side surface 111 is closer to the side X1 than side surface 112 is.

Each power storage module 10 includes a lower module 1 and an upper module 2. Upper module 2 is disposed above lower module 1 (or closer to a side Z1 than the lower module is). Lower module 1 and upper module 2 are disposed in layers in the direction Z with cooler 30 interposed therebetween. Each power storage module 10 may include only one of lower module 1 and upper module 2.

The nine power storage modules 10 are connected in series by a bus bar. The bus bar includes a first bus bar, a second bus bar, and a third bus bar. The first bus bar electrically connects together power storage modules 10 aligned in the direction Y. The second bus bar electrically connects together lower module 1 and upper module 2 aligned in an upward/downward direction. The third bus bar electrically connects together rows of modules M aligned in the direction X.

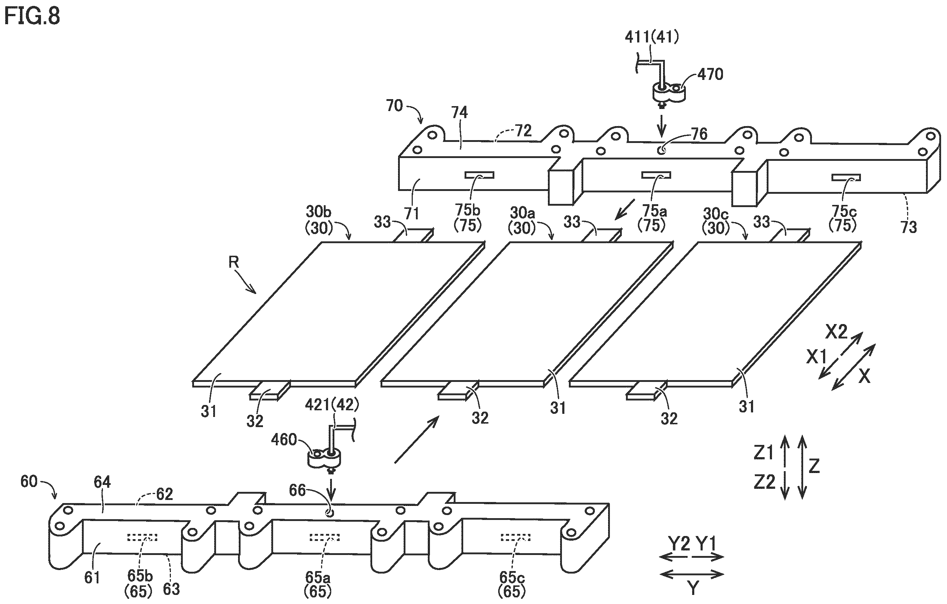

Cooling unit R cools power storage unit 110 with refrigerant supplied through cooling pipe 41. Cooling unit R is provided for each row of modules M. That is, in the present embodiment, the plurality of cooling units R include three cooling units R. Each cooling unit R includes three coolers 30. More specifically, each cooling unit R includes a first cooler 30a (see Fig. 8), a second cooler 30b (see Fig. 8), and a third cooler 30c (see Fig. 8). First cooler 30a is cooler 30 that cools first power storage module 10a. Second cooler 30b is cooler 30 that cools second power storage module 10b. Third cooler 30c is cooler 30 that cools third power storage module 10c. Therefore, in the present embodiment, power storage device 100 includes nine coolers 30. Cooler 30 is not limited to nine in number. The number of coolers 30 may vary depending on the number of power storage modules 10. Each cooler 30 is disposed between lower module 1 and upper module 2. That is, each cooling unit R is disposed between lower module 1 and upper module 2.

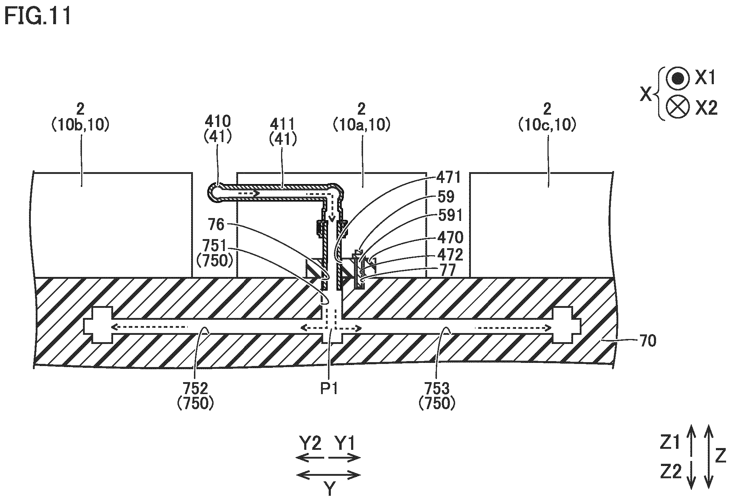

Cooling pipe 41 is a pipe that passes refrigerant. Cooling pipe 41 is a pipe that passes refrigerant supplied to each cooling unit R. More specifically, cooling pipe 41 is a pipe that passes refrigerant supplied to each cooler 30. Cooling pipe 41 includes a main pipe 410 and three subordinate pipes 411 branched from main pipe 410. Main pipe 410 extends in the direction X between second power storage module 10b and first power storage module 10a. The three subordinate pipes 411 extend along side surfaces 112 respectively of the three first power storage modules 10a aligned in the direction X. Each subordinate pipe 411 is connected to a channel 750 (see Fig. 11) formed through bracket 70 provided on side surface 112. Cooling pipe 41 has a cylindrical shape.

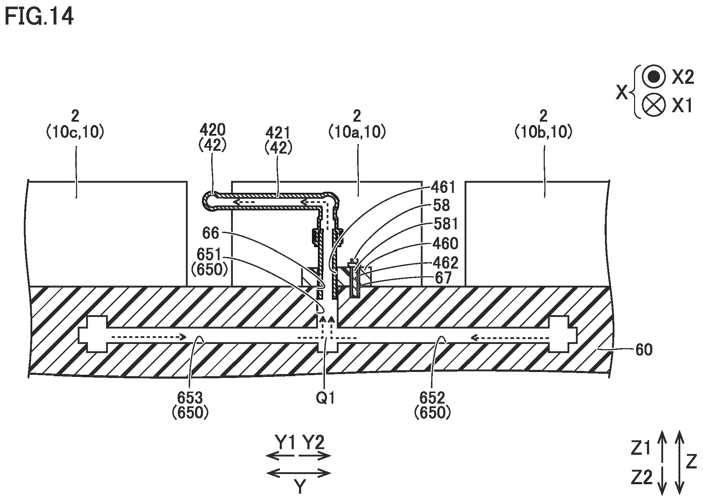

Cooling pipe 42 is a pipe that passes refrigerant. Cooling pipe 42 is a pipe that passes refrigerant discharged from each cooling unit R. More specifically, cooling pipe 42 is a pipe that passes refrigerant discharged from each cooler 30. Cooling pipe 42 includes a main pipe 420 and three subordinate pipes 421 branched from main pipe 420. Main pipe 420 extends in the direction X between first power storage module 10a and third power storage module 10c. The three subordinate pipes 421 extend along side surfaces 111 respectively of the three first power storage modules 10a aligned in the direction X. Each subordinate pipe 421 is connected to a channel 650 (see Fig. 14) formed through bracket 60 provided on side surface 111. Cooling pipe 42 has a cylindrical shape.

Brackets 60 and 70 are each secured to lower case 92 via reinforcement member 81. Brackets 60 and 70 each secure power storage unit 110 to lower case 92. More specifically, brackets 60 and 70 each secure row of modules M composed of three power storage modules 10 (i.e., first, second and third power storage modules 10a, 10b and 10c) to lower case 92. Brackets 60 and 70 may each be formed for example of aluminum.

Brackets 60 and 70 are each provided for each row of modules M. That is, in the present embodiment, the plurality of brackets 60 include three brackets 60, and the plurality of brackets 70 include three brackets 70. Brackets 60 and 70 are each not limited to three in number. The number of each of brackets 60 and 70 may vary depending on the number of rows of modules M.

Brackets 60 and 70 each couple the three power storage modules 10 of row of modules M (i.e., first, second and third power storage modules 10a, 10b and 10c) together. Brackets 60 and 70 each extend in the direction Y so as to straddle first, second and third power storage modules 10a, 10b and 10c. More specifically, bracket 60 is provided so as to straddle side surfaces 111 respectively of the three power storage modules 10 aligned in the direction Y (i.e., first, second and third power storage modules 10a, 10b and 10c). Bracket 70 is provided so as to straddle side surfaces 112 respectively of three power storage modules 10 aligned in the direction Y (i.e., first, second and third power storage modules 10a, 10b and 10c).

Brackets 60 and 70 each couple lower module 1 and upper module 2 together for each of the three power storage modules 10 in row of modules M.

Power storage device 100 further comprises a bolt 56 and a bolt 57. Bolt 56 bolts bracket 60 and reinforcement member 81 together. Bolt 57 bolts bracket 70 and reinforcement member 81 together.

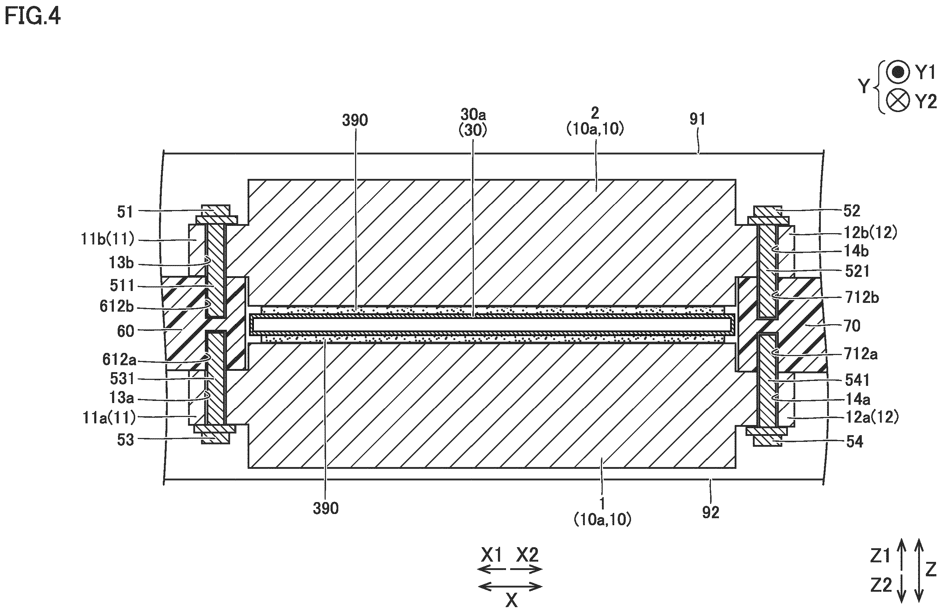

Power storage device 100 further comprises a bolt 51, a bolt 52, a bolt 53 (see Fig. 4), and a bolt 54 (see Fig. 4). Power storage module 10 includes a coupling portion 11 and a coupling portion 12 that are spaced from each other in the direction X. Coupling portion 11 is closer to the side X1 than coupling portion 12 is. Bolts 51 and 53 bolt coupling portion 11 and bracket 60 together. Bolts 52 and 54 bolt coupling portion 12 and bracket 70 together.

A method for securing power storage unit 110 (see Fig. 2) will now be described with reference to Figs. 4 to 7.

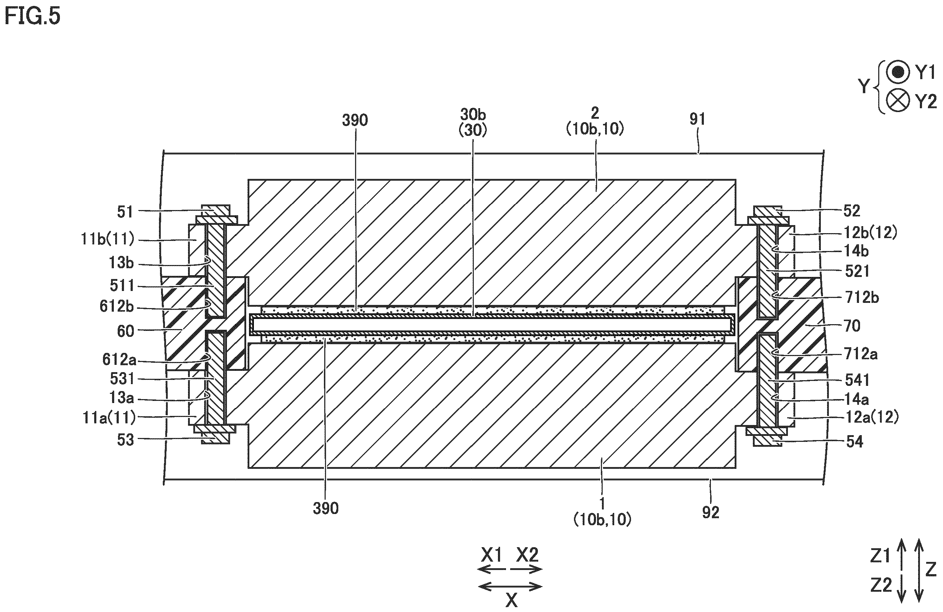

A method for securing power storage module 10 to each of brackets 60 and 70 will now be described with reference to Figs. 4 and 5. Fig. 4 is a cross section taken along a line IV-IV indicated in Fig. 3. Fig. 5 is a cross section taken along a line V-V indicated in Fig. 3. Fig. 4 shows a method for securing first power storage module 10a to each of brackets 60 and 70. Fig. 5 shows a method for securing second power storage module 10b to each of brackets 60 and 70.

Referring to Figs. 4 and 5, coupling portion 11 of power storage module 10 includes a lower coupling portion 11a and an upper coupling portion 11b. Lower coupling portion 11a is provided at lower module 1. Upper coupling portion 11b is provided at upper module 2. Lower coupling portion 11a has a through hole 13a formed therethrough to extend in the direction Z. Upper coupling portion 11b has a through hole 13b formed therethrough to extend in the direction Z.

Bracket 60 has a blind hole 612a having an opening downward (or on a side Z2) and extending upward (or toward the side Z1). Furthermore, bracket 60 has a blind hole 612b having an opening upward (or on the side Z1) and extending downward (or toward the side Z2).

Blind hole 612a is located above through hole 13a (or on the side Z1 with respect thereto). More specifically, blind hole 612a and through hole 13a are positionally the same in the XY plane. Blind hole 612b is located below through hole 13b (or on the side Z2 with respect thereto). More specifically, blind hole 612b and through hole 13b are positionally the same in the XY plane.

Bolt 53 has a shaft 531 inserted into through hole 13a from below (or on the side Z2). Shaft 531 passes through through hole 13a and is inserted into blind hole 612a from below (or on the side Z2). Lower module 1 is secured to bracket 60 with bolt 53.

Bolt 51 has a shaft 511 inserted into through hole 13b from above (or on the side Z1). Shaft 511 passes through through hole 13b and is inserted into blind hole 612b from above (or on the side Z1). Upper module 2 is secured to bracket 60 with bolt 51.

Referring to Fig. 4, first power storage module 10a having lower module 1 and upper module 2 secured to bracket 60 thus has lower module 1 and upper module 2 coupled together via bracket 60. Referring to Fig. 5, second power storage module 10b having lower module 1 and upper module 2 secured to bracket 60 thus has lower module 1 and upper module 2 coupled together via bracket 60.

That is, bracket 60 couples lower module 1 of first power storage module 10a and upper module 2 of first power storage module 10a together, and couples lower module 1 of second power storage module 10b and upper module 2 of second power storage module 10b together. Lower module 1 of first power storage module 10a is an example of a "first lower module" in the present disclosure. Upper module 2 of first power storage module 10a is an example of a "first upper module" in the present disclosure. Lower module 1 of second power storage module 10b is an example of a "second lower module" in the present disclosure. Upper module 2 of second power storage module 10b is an example of a "second upper module" in the present disclosure.

Referring to Figs. 4 and 5, coupling portion 12 of power storage module 10 includes a lower coupling portion 12a and an upper coupling portion 12b. Lower coupling portion 12a is provided at lower module 1. Upper coupling portion 12b is provided at upper module 2. Lower coupling portion 12a has a through hole 14a formed therethrough to extend in the direction Z. Upper coupling portion 12b has a through hole 14b formed therethrough to extend in the direction Z.

Bracket 70 has a blind hole 712a having an opening downward (or on the side Z2) and extending upward (or toward the side Z1). Furthermore, bracket 70 has a blind hole 712b having an opening upward (or on the side Z1) and extending downward (or toward the side Z2).

Blind hole 712a is located above through hole 14a (or on the side Z1 with respect thereto). More specifically, blind hole 712a and through hole 14a are positionally the same in the XY plane. Blind hole 712b is located below through hole 14b (or on the side Z2 with respect thereto). More specifically, blind hole 712b and through hole 14b are positionally the same in the XY plane.

Bolt 54 has a shaft 541 inserted into through hole 14a from below (or on the side Z2). Shaft 541 passes through through hole 14a and is inserted into blind hole 712a from below (or on the side Z2). Lower module 1 is secured to bracket 70 with bolt 54.

Bolt 52 has a shaft 521 inserted into through hole 14b from above (or on the side Z1). Shaft 521 passes through through hole 14b and is inserted into blind hole 712b from above (or on the side Z1). Upper module 2 is secured to bracket 70 with bolt 52.

Referring to Fig. 4, first power storage module 10a having lower module 1 and upper module 2 secured to bracket 70 thus has lower module 1 and upper module 2 coupled together via bracket 70. Referring to Fig. 5, second power storage module 10b having lower module 1 and upper module 2 secured to bracket 70 thus has lower module 1 and upper module 2 coupled together via bracket 70.

That is, bracket 70 couples lower module 1 of first power storage module 10a and upper module 2 of first power storage module 10a together, and couples lower module 1 of second power storage module 10b and upper module 2 of second power storage module 10b together.

The securing method shown in Fig. 4 or Fig. 5 may be employed as a method for securing third power storage module 10c to each of brackets 60 and 70. In the present embodiment, first, second and third power storage modules 10a, 10b and 10c are secured to each of brackets 60 and 70 by the securing method shown in Fig. 4 or 5. That is, third power storage module 10c also has lower module 1 and upper module 2 coupled together by each of brackets 60 and 70. First, second and third power storage modules 10a, 10b and 10c secured to bracket 60 are thus coupled together via bracket 60. Furthermore, first, second and third power storage modules 10a, 10b and 10c secured to bracket 70 are thus coupled together via bracket 70. That is, brackets 60 and 70 each couple first, second and third power storage modules 10a, 10b and 10c together.

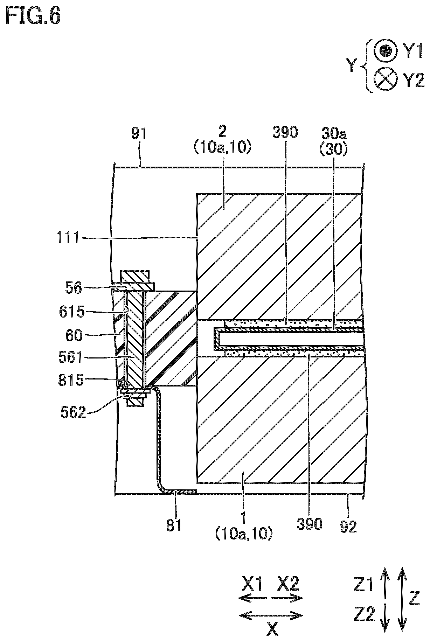

A method for securing bracket 60 to lower case 92 will now be described with reference to Fig. 6. Fig. 6 is a cross section taken along a line VI-VI indicated in Fig. 3. Fig. 6 does not show cooling pipe 42.

Bracket 60 is fastened to reinforcement member 81 and thus secured to lower case 92 via reinforcement member 81. Specifically, bracket 60 has a through hole 615 formed therethrough to extend in the direction Z. Reinforcement member 81 has a through hole 815 formed therethrough. Through hole 815 is located below through hole 615 (or on the side Z2 with respect thereto). More specifically, through hole 615 and through hole 815 are positionally the same in the XY plane.

Bolt 56 has a shaft 561 inserted into through hole 615 from above (or on the side Z1), passed through through holes 615 and 815, and screwed into a nut 562 provided under reinforcement member 81 (or on the side Z2 with respect thereto). Bracket 60 is secured to reinforcement member 81 by bolt 56 and nut 562. As has been described above, reinforcement member 81 is secured to bottom wall 921 (see Fig. 2) of lower case 92. Accordingly, bracket 60 is secured to lower case 92 via reinforcement member 81.

As has been described above, bracket 60 couples the three power storage modules 10 of each row of modules M (i.e., first, second and third power storage modules 10a, 10b and 10c) together. Row of modules M having three power storage modules 10 coupled together by bracket 60 secured via reinforcement member 81 to lower case 92 thus has the three power storage modules 10 secured. That is, bracket 60 secures the three power storage modules 10 included in row of modules M (i.e., first, second and third power storage modules 10a, 10b and 10c).

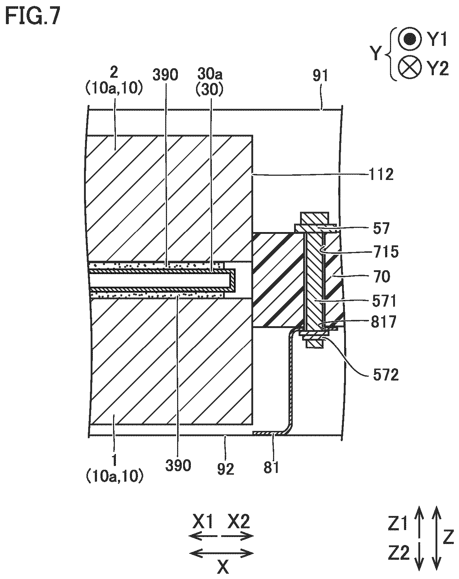

A method for securing bracket 70 to lower case 92 will now be described with reference to Fig. 7. Fig. 7 is a cross section taken along a line VII-VII indicated in Fig. 3. Fig. 7 does not show cooling pipe 41.

Bracket 70 is fastened to reinforcement member 81 and thus secured to lower case 92 via reinforcement member 81. Specifically, bracket 70 has a through hole 715 formed therethrough to extend in the direction Z. Reinforcement member 81 has a through hole 817 formed therethrough. Through hole 817 is located below through hole 715 (or on the side Z2 with respect thereto). More specifically, through hole 715 and through hole 817 are positionally the same in the XY plane.

Bolt 57 has a shaft 571 inserted into through hole 715 from above (or on the side Z1), passed through through holes 715 and 817, and screwed into a nut 572 provided under reinforcement member 81 (or on the side Z2 with respect thereto). Bracket 70 is secured to reinforcement member 81 by bolt 57 and nut 572. As has been described above, reinforcement member 81 is secured to bottom wall 921 (see Fig. 2) of lower case 92. Accordingly, bracket 70 is secured to lower case 92 via reinforcement member 81.

As has been described above, bracket 70 couples the three power storage modules 10 of each row of modules M (i.e., first, second and third power storage modules 10a, 10b and 10c) together. Row of modules M having three power storage modules 10 coupled together by bracket 70 secured via reinforcement member 81 to lower case 92 thus has the three power storage modules 10 secured. That is, bracket 70 secures the three power storage modules 10 included in row of modules M (i.e., first, second and third power storage modules 10a, 10b and 10c).

Reference will now be made to Figs. 8 to 14 to describe a cooling structure of power storage device 100 (see Fig. 2).

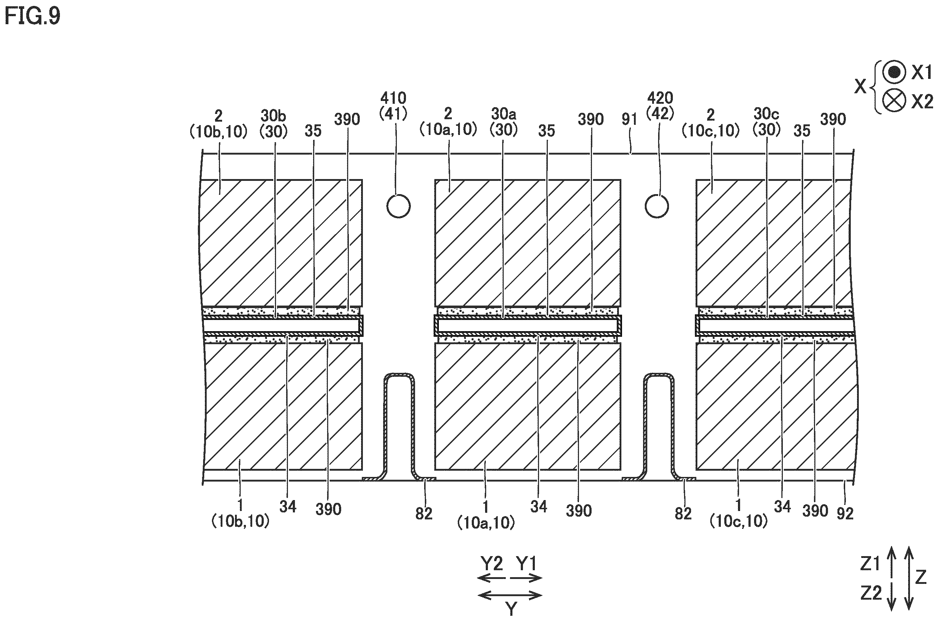

Fig. 8 is a schematic perspective view of cooler 30, brackets 60 and 70, and cooling pipes 41 and 42. Fig. 9 is a cross section taken along a line IX-IX indicated in Fig. 3.

Referring to Fig. 8, cooler 30 is formed of metal (e.g., aluminum). Cooler 30 is for example in the form of a plate in geometry.

Referring to Fig. 9, cooler 30 is disposed between lower module 1 and upper module 2. Cooler 30 includes a lower surface 34 and an upper surface 35 spaced in the direction Z. Upper surface 35 is located above lower surface 34 (or closer to the side Z1 than lower surface 34 is). Lower surface 34 is an end surface of cooler 30 closer to the side Z2. Upper surface 35 is an end surface of cooler 30 closer to the side Z1. Lower surface 34 and upper surface 35 are provided with a thermally conductive material 390. Thermally conductive material 390 is for example higher in thermal conductivity than air (an air gap). Lower surface 34 and upper surface 35 provided with thermally conductive material 390 enhance thermal conductivity between cooler 30 and each of lower module 1 and upper module 2.

Cooling pipe 41 supplies refrigerant, which passes through cooler 30. As the refrigerant supplied from cooling pipe 41 passes through cooler 30, the refrigerant cools each of lower module 1 and upper module 2 sandwiching cooler 30.

First cooler 30a is cooler 30 provided for first power storage module 10a. First cooler 30a is disposed between lower module 1 of first power storage module 10a and upper module 2 of first power storage module 10a, and cools first power storage module 10a with the refrigerant supplied from cooling pipe 41.

Second cooler 30b is cooler 30 provided for second power storage module 10b. Second cooler 30b is disposed between lower module 1 of second power storage module 10b and upper module 2 of second power storage module 10b, and cools second power storage module 10b with the refrigerant supplied from cooling pipe 41.

Third cooler 30c is cooler 30 provided for third power storage module 10c. Third cooler 30c is disposed between lower module 1 of third power storage module 10c and upper module 2 of third power storage module 10c, and cools third power storage module 10c with the refrigerant supplied from cooling pipe 41.

Referring to Fig. 8 again, cooler 30 includes a body 31, an insertion portion 32, and an insertion portion 33. Insertion portion 32 projects from body 31 toward the side X1. Insertion portion 33 projects from body 31 toward a side X2.

Bracket 60 includes a side surface 61 and a side surface 62 that are spaced from each other in the direction X. Side surface 62 is closer to the side X2 than side surface 61 is. Side surface 62 has a unit insertion port 65. Unit insertion port 65 allows an inside of bracket 60 and an outside of bracket 60 to communicate with each other. Unit insertion port 65 receives cooling unit R. More specifically, unit insertion port 65 includes an insertion port 65a, an insertion port 65b, and an insertion port 65c. Insertion ports 65a, 65b, and 65c each allow the inside of bracket 60 and the outside of bracket 60 to communicate with each other. Insertion port 65a receives insertion portion 32 of first cooler 30a. Insertion port 65b receives insertion portion 32 of second cooler 30b. Insertion port 65c receives insertion portion 32 of third cooler 30c. Insertion port 65a is an example of a "first insertion port" in the present disclosure. Insertion port 65b is an example of a "second insertion port" in the present disclosure. Cooling unit R is welded to bracket 60.

Bracket 60 includes a lower surface 63 and an upper surface 64 spaced in the direction Z. Upper surface 64 is located above lower surface 63 (or closer to the side Z1 than lower surface 63 is). Upper surface 64 has a pipe insertion port 66. Pipe insertion port 66 allows an inside of bracket 60 and an outside of bracket 60 to communicate with each other. Pipe insertion port 66 receives subordinate pipe 421 of cooling pipe 42.

Bracket 70 includes a side surface 71 and a side surface 72 that are spaced from each other in the direction X. Side surface 72 is closer to the side X2 than side surface 71 is. Side surface 71 has a unit insertion port 75. Unit insertion port 75 allows an inside of bracket 70 and an outside of bracket 70 to communicate with each other. Unit insertion port 75 receives cooling unit R. More specifically, unit insertion port 75 includes an insertion port 75a, an insertion port 75b, and an insertion port 75c. Insertion ports 75a, 75b, and 75c each allow an inside of bracket 70 and an outside of bracket 70 to communicate with each other. Insertion port 75a receives insertion portion 33 of first cooler 30a. Insertion port 75b receives insertion portion 33 of second cooler 30b. Insertion port 75c receives insertion portion 33 of third cooler 30c. Insertion port 75a is an example of the "first insertion port" in the present disclosure. Insertion port 75b is an example of the "second insertion port" in the present disclosure. Cooling unit R is welded to bracket 70.

Bracket 70 includes a lower surface 73 and an upper surface 74 spaced in the direction Z. Upper surface 74 is located above lower surface 73 (or closer to the side Z1 than lower surface 73 is). Upper surface 74 has a pipe insertion port 76. Pipe insertion port 76 allows an inside of bracket 70 and an outside of bracket 70 to communicate with each other. Pipe insertion port 76 receives subordinate pipe 411 of cooling pipe 41.

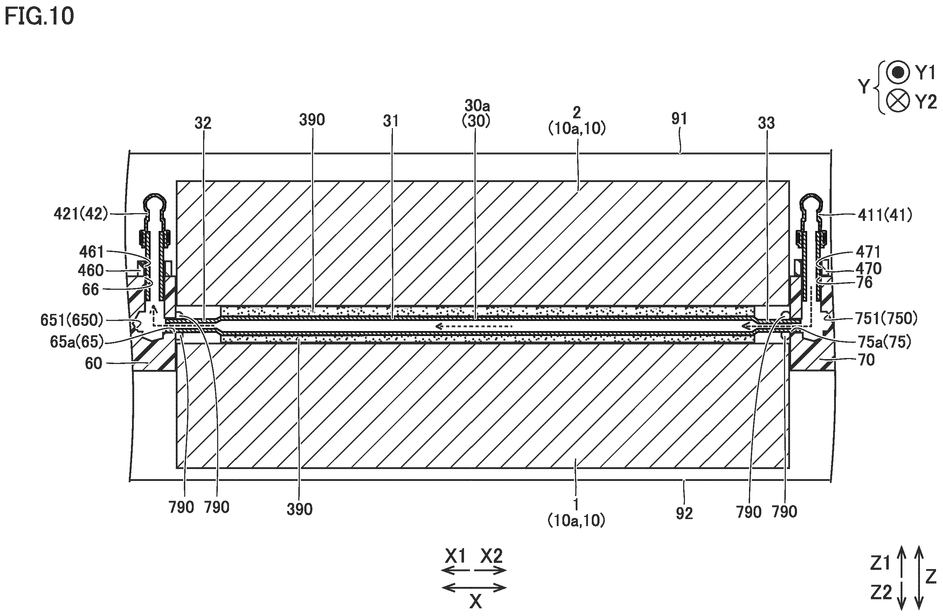

Reference will now be made to Figs. 10 and 11 to describe a path that passes refrigerant from cooling pipe 41 to first cooler 30a. Fig. 10 is a cross section taken along a line X-X indicated in Fig. 3. Fig. 11 is a cross section taken along a line XI-XI indicated in Fig. 3. Figs. 10 and 11 indicate a path that passes refrigerant by a dotted line. Note that Fig. 11 does not show cooling pipe 42 to make the drawing easy to see.

Referring to Fig. 11, bracket 70 has a channel 750 formed therein to pass refrigerant. Channel 750 interconnects pipe insertion port 76 and unit insertion port 75 (see Figs. 8 and 10). More specifically, channel 750 includes a first supply channel 751, a second supply channel 752, and a third supply channel 753. First supply channel 751 interconnects pipe insertion port 76 and insertion port 75a (see Fig. 10). Second supply channel 752 branches from first supply channel 751 at a branching point P1 and interconnects branching point P1 and insertion port 75b (see Fig. 8). Branching point P1 is located on first supply channel 751. Third supply channel 753 branches from first supply channel 751 at branching point P1 and interconnects branching point P1 and insertion port 75c (see Fig. 8). First supply channel 751 is an example of a "first channel" in the present disclosure. Second supply channel 752 is an example of a "second channel" in the present disclosure.

Referring to Figs. 10 and 11, subordinate pipe 411 is inserted into pipe insertion port 76 from above (or on the side Z1). More specifically, power storage device 100 (see Fig. 2) further comprises a joint 470. Joint 470 has a through hole 471 extending in the direction Z and passing subordinate pipe 411. Subordinate pipe 411 is inserted into through hole 471 from above (or on the side Z1). Subordinate pipe 411 passes through through hole 471 and is inserted into pipe insertion port 76 from above (or on the side Z1). Subordinate pipe 411 passes through pipe insertion port 76 and is connected to first supply channel 751 of channel 750.

Referring to Fig. 11, subordinate pipe 411 is secured to bracket 70 with joint 470 and a bolt 59. More specifically, power storage device 100 (see Fig. 2) further comprises bolt 59. Joint 470 has a through hole 472 extending in the direction Z and passing bolt 59. Bracket 70 has a blind hole 77 extending in the direction Z. Through hole 472 and blind hole 77 are positionally the same in the XY plane. Bolt 59 has a shaft 591 inserted into through hole 472 from above (or on the side Z1).

Shaft 591 passes through through hole 472 and is inserted into blind hole 77 from above (or on the side Z1). Subordinate pipe 411 passing through joint 470 secured to bracket 70 with bolt 59 is thus also secured to bracket 70.

Referring to Fig. 10, first cooler 30a has insertion portion 33 inserted into insertion port 75a on the side X1. First cooler 30a has insertion portion 33 passing through insertion port 75a and connected to first supply channel 751 of channel 750. First cooler 30a is welded to bracket 70. As one example, first cooler 30a has insertion portion 33 joined to bracket 70 with a brazing material 790. First cooler 30a welded to bracket 70 is thus secured to bracket 70.

As subordinate pipe 411 and first cooler 30a are connected to first supply channel 751, refrigerant supplied from subordinate pipe 411 passes through first supply channel 751 and is supplied to first cooler 30a.

As shown in Fig. 11, second supply channel 752 and third supply channel 753 branch from first supply channel 751 at branching point P1. Therefore, the refrigerant supplied from subordinate pipe 411 is also supplied to second supply channel 752 and third supply channel 753.

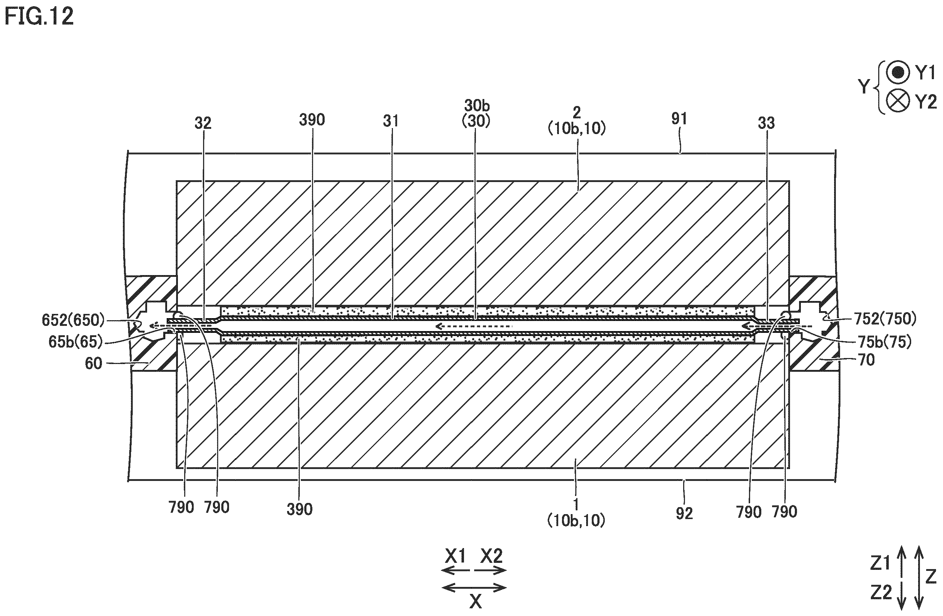

Reference will now be made to Figs. 11 and 12 to describe a path that passes refrigerant from cooling pipe 41 to second cooler 30b. Fig. 12 is a cross section taken along a line XII-XII indicated in Fig. 3. Fig. 12 indicates the path that passes the refrigerant by a dotted line.

Referring to Fig. 12, second cooler 30b has insertion portion 33 inserted into insertion port 75b on the side X1. Second cooler 30b has insertion portion 33 passing through insertion port 75b and connected to second supply channel 752 of channel 750. Second cooler 30b is welded to bracket 70. As one example, second cooler 30b has insertion portion 33 joined to bracket 70 with brazing material 790. Second cooler 30b welded to bracket 70 is thus secured to bracket 70.

Referring to Figs. 11 and 12, as second supply channel 752 branches from first supply channel 751 and second cooler 30b is connected to second supply channel 752, the refrigerant supplied from subordinate pipe 411 passes through first supply channel 751 and second supply channel 752 and is supplied to second cooler 30b.

Reference will now be made to Figs. 8 and 11 to describe a path that passes refrigerant from cooling pipe 41 to third cooler 30c.

Referring to Fig. 8, third cooler 30c has insertion portion 33 inserted into insertion port 75c on the side X1. Third cooler 30c has insertion portion 33 passing through insertion port 75c and connected to third supply channel 753 (see Fig. 11) of channel 750. Third cooler 30c is also welded to bracket 70. As one example, third cooler 30c has insertion portion 33 joined to bracket 70 with brazing material 790 (see Figs. 10 and 12). Third cooler 30c welded to bracket 70 is thus secured to bracket 70.

With reference to Fig. 11, as third supply channel 753 branches from first supply channel 751, and third cooler 30c (see Fig. 8) is connected to third supply channel 753, the refrigerant supplied from subordinate pipe 411 passes through first supply channel 751 and third supply channel 753 and is supplied to third cooler 30c.

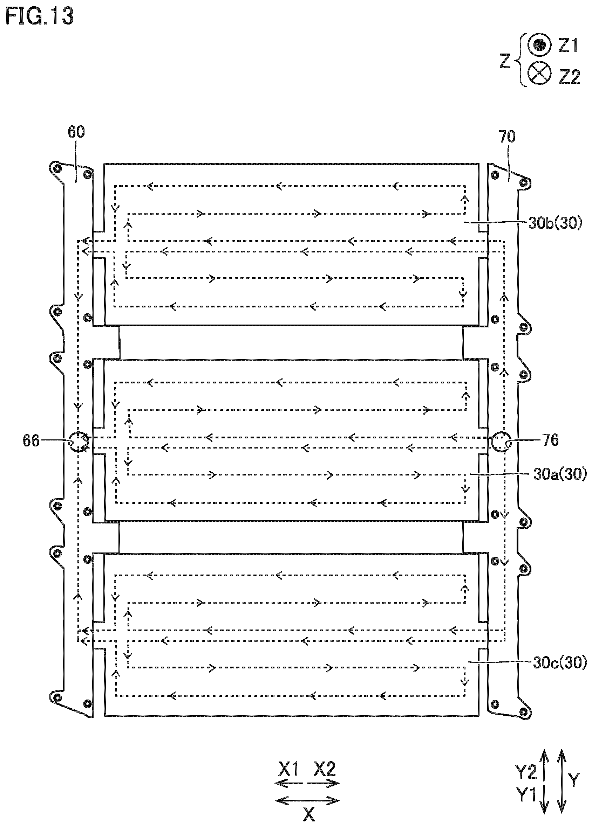

Reference will now be made to Fig. 13 to describe a path that passes refrigerant through cooler 30. Fig. 13 is a plan view schematically showing a path that passes refrigerant. Fig. 13 indicates the path that passes refrigerant by a dotted line.

Via channel 750 (see Fig. 11) subordinate pipe 411 supplies refrigerant, which flows into each cooler 30 on the side X2. The refrigerant flows through first cooler 30a, second cooler 30b, and third cooler 30c in parallel. Cooler 30 has a channel formed therein to allow the refrigerant to proceed toward the side X1 while flowing back and forth in the direction X. The refrigerant flowing into cooler 30 flows along the channel in cooler 30 and is discharged to cooling pipe 42 (see Fig. 8) through channel 650 (see Fig. 14) formed through bracket 60.

Reference will now be made to Figs. 10 and 14 to describe a path that passes refrigerant from first cooler 30a to cooling pipe 42. Fig. 14 is a cross section taken along a line XIV-XIV indicated in Fig. 3. Fig. 14 indicates the path that passes refrigerant by a dotted line. Note that Fig. 14 does not show cooling pipe 41 to make the drawing easy to see.

Referring to Fig. 14, bracket 60 has channel 650 formed therein to pass refrigerant. Channel 650 interconnects pipe insertion port 66 and unit insertion port 65 (see Figs. 8 and 10). More specifically, channel 650 includes a first discharge channel 651, a second discharge channel 652, and a third discharge channel 653. First discharge channel 651 interconnects pipe insertion port 66 and insertion port 65a (see Fig. 10). Second discharge channel 652 branches from first discharge channel 651 at a branching point Q1 and interconnects branching point Q1 and insertion port 65b (see Fig. 8). Branching point Q1 is located on first discharge channel 651. Third discharge channel 653 branches from first discharge channel 651 at branching point Q1 and interconnects branching point Q1 and insertion port 65c (see Fig. 8). First discharge channel 651 is an example of the "first channel" in the present disclosure. Second discharge channel 652 is an example of the "second channel" in the present disclosure.

Referring to Figs. 10 and 14, subordinate pipe 421 is inserted into pipe insertion port 66 from above (or on the side Z1). More specifically, power storage device 100 (see Fig. 2) further comprises a joint 460. Joint 460 has a through hole 461 extending in the direction Z and passing subordinate pipe 421. Subordinate pipe 421 is inserted into through hole 461 from above (or on the side Z1). Subordinate pipe 421 passes through through hole 461 and is inserted into pipe insertion port 66 from above (or on the side Z1). Subordinate pipe 421 passes through pipe insertion port 66 and is connected to first discharge channel 651 of channel 650.

Referring to Fig. 14, subordinate pipe 421 is secured to bracket 60 with joint 460 and a bolt 58. More specifically, power storage device 100 (see Fig. 2) further comprises bolt 58. Joint 460 has a through hole 462 extending in the direction Z and passing bolt 58. Bracket 60 has a blind hole 67 extending in the direction Z. Through hole 462 and blind hole 67 are positionally the same in the XY plane. Bolt 58 has a shaft 581 inserted into through hole 462 from above (or on the side Z1). Shaft 581 passes through through hole 462 and is inserted into blind hole 67 from above (or on the side Z1). Subordinate pipe 421 passing through joint 460 secured to bracket 60 with bolt 58 is thus also secured to bracket 60.

Referring to Fig. 10, first cooler 30a has insertion portion 32 inserted into insertion port 65a on the side X2. First cooler 30a has insertion portion 32 passing through insertion port 65a and connected to first discharge channel 651 of channel 650. First cooler 30a is welded to bracket 60. As one example, first cooler 30a has insertion portion 32 joined to bracket 60 with brazing material 790. First cooler 30a welded to bracket 60 is thus secured to bracket 60.

As subordinate pipe 421 and first cooler 30a are connected to first discharge channel 651, refrigerant discharged from first cooler 30a passes through first discharge channel 651 and is discharged to subordinate pipe 421.

As shown in Fig. 14, second discharge channel 652 and third discharge channel 653 branch from first discharge channel 651 at branching point Q1. Therefore, refrigerant flowing to branching point Q1 through second discharge channel 652 and third discharge channel 653 is discharged to subordinate pipe 421 through first discharge channel 651.

Reference will now be made to Figs. 12 and 14 to describe a path that passes refrigerant from second cooler 30b to cooling pipe 42.

Referring to Fig. 12, second cooler 30b has insertion portion 32 inserted into insertion port 65b on the side X2. Second cooler 30b has insertion portion 32 passing through insertion port 65b and connected to second discharge channel 652 of channel 650. Second cooler 30b is welded to bracket 60. As one example, second cooler 30b has insertion portion 32 joined to bracket 60 with brazing material 790. Second cooler 30b welded to bracket 60 is thus secured to bracket 60.

With reference to Figs. 12 and 14, as second discharge channel 652 branches from first discharge channel 651 and second cooler 30b is connected to second discharge channel 652, refrigerant discharged from second cooler 30b passes through second discharge channel 652 and first discharge channel 651 and is discharged to subordinate pipe 421.

Reference will now be made to Figs. 8 and 14 to describe a path that passes refrigerant from third cooler 30c to cooling pipe 42.

Referring to Fig. 8, third cooler 30c has insertion portion 32 inserted into insertion port 65c on the side X2. Third cooler 30c has insertion portion 32 passing through insertion port 65c and connected to third discharge channel 653 (see Fig. 14) of channel 650. Third cooler 30c is welded to bracket 60. As one example, third cooler 30c has insertion portion 32 joined to bracket 60 with brazing material 790 (see Figs. 10 and 12). Third cooler 30c welded to bracket 60 is thus secured to bracket 60.

With reference to Fig. 14, as third discharge channel 653 branches from first discharge channel 651 and third cooler 30c (see Fig. 8) is connected to third discharge channel 653, refrigerant discharged from third cooler 30c passes through third discharge channel 653 and first discharge channel 651 and is discharged to subordinate pipe 421.

Thus, in power storage device 100 according to the present embodiment, bracket 70 (60) is secured to lower case 92 and secures power storage unit 110, and has pipe insertion port 76 (66) receiving cooling pipe 41 (42) and unit insertion port 75 (65) receiving cooling unit R. Bracket 70 (60) internally has channel 750 (650) that passes refrigerant and interconnects pipe insertion port 76 (66) and unit insertion port 75 (65). Therefore, a position at which cooling pipe 41 (42) is inserted is determined regardless of a position at which cooling unit R is inserted. Power storage device 100 according to the present embodiment allows better assemblability for cooling pipe 41 (42) than when cooling unit R and cooling pipe 41 (42) are directly coupled together.

Furthermore, power storage device 100 according to the present embodiment has cooling unit R and cooling pipe 41 (42) interconnected via channel 750 (650) formed through bracket 70 (60). Therefore, power storage device 100 according to the present embodiment can absorb displacement of a position at which cooling unit R is mounted in the direction X within a range in which cooling unit R can be inserted into unit insertion port 75 (65). Furthermore, power storage device 100 according to the present embodiment can absorb variation in length (or manufacturing) of cooling unit R in the direction X within a range in which cooling unit R can be inserted into unit insertion port 75 (65). Furthermore, power storage device 100 according to the present embodiment can absorb displacement of a position at which cooling pipe 41 (42) is mounted in the upward/downward direction within a range in which cooling pipe 41 (42) can be inserted into pipe insertion port 76 (66). Furthermore, power storage device 100 according to the present embodiment can absorb variation in length (or manufacturing) of cooling pipe 41 (42) in the upward/downward direction within a range in which cooling pipe 41 (42) can be inserted into pipe insertion port 76 (66).

Furthermore, in power storage device 100 according to the present embodiment, power storage unit 110 includes power storage module 10 including lower module 1 and upper module 2. Cooling unit R is disposed between lower module 1 and upper module 2. Therefore, power storage device 100 according to the present embodiment can efficiently cool lower module 1 and upper module 2.

Furthermore, in power storage device 100 according to the present embodiment, cooling unit R is disposed between lower module 1 and upper module 2. Furthermore, bracket 70 (60) couples lower module 1 and upper module 2 together. Therefore, power storage device 100 according to the present embodiment can suppress positional displacement of lower module 1, upper module 2, and cooling unit R.

Furthermore, in power storage device 100 according to the present embodiment, power storage unit 110 includes first power storage module 10a and second power storage module 10b horizontally adjacent to first power storage module 10a. Cooling unit R includes first cooler 30a that cools first power storage module 10a with the refrigerant, and second cooler 30b that cools second power storage module 10b with the refrigerant. Bracket 70 has pipe insertion port 76 that receives cooling pipe 41, insertion port 75a that receives first cooler 30a, and insertion port 75b that receives second cooler 30b. Channel 750 includes first supply channel 751 that interconnects pipe insertion port 76 and insertion port 75a, and second supply channel 752 that branches from first supply channel 751 at branching point P1 and interconnects branching point P1 and insertion port 75b. This allows refrigerant to flow through first cooler 30a and second cooler 30b in parallel. Therefore, power storage device 100 according to the present embodiment can suppress heat transfer to second power storage module 10b when first power storage module 10a exhibits thermal runaway.

Furthermore, in power storage device 100 according to the present embodiment, first power storage module 10a and second power storage module 10b are coupled together via bracket 70. Furthermore, the refrigerant supplied from cooling pipe 41 passes through channel 750 formed through bracket 70. Therefore, power storage device 100 according to the present embodiment can suppress heat transfer to second power storage module 10b via bracket 70 when first power storage module 10a exhibits thermal runaway.

Furthermore, in power storage device 100 according to the present embodiment, first power storage module 10a includes a first lower module and a first upper module disposed above the first lower module. Second power storage module 10b includes a second lower module and a second upper module disposed above the second lower module. First cooler 30a is disposed between the first lower module and the first upper module, and second cooler 30b is disposed between the second lower module and the second upper module. Therefore, power storage device 100 according to the present embodiment can efficiently cool the first lower module and the first upper module. Furthermore, power storage device 100 according to the present embodiment can efficiently cool the second lower module and the second upper module.

Furthermore, in power storage device 100 according to the present embodiment, first cooler 30a is disposed between the first lower module and the first upper module, and second cooler 30b is disposed between the second lower module and the second upper module. Furthermore, bracket 70 (60) couples the first lower module and the first upper module together and couples the second lower module and the second upper module together. Therefore, power storage device 100 according to the present embodiment can suppress positional displacement of the first lower module, the first upper module, the second lower module, the second upper module, first cooler 30a, and second cooler 30b.

Furthermore, in power storage device 100 according to the present embodiment, cooling unit R is welded to bracket 70 (60). Thus, power storage device 100 according to the present embodiment can prevent cooling unit R from escaping from bracket 70 (60).

While embodiments of the present disclosure have been described, it should be understood that the embodiments disclosed herein are illustrative and non-restrictive in any respect. The scope of the present disclosure is defined by the terms of the claims and intended to encompass any change that falls within the meaning and scope equivalent to the terms of the claims.

## Claims

1. A power storage device comprising:
a power storage unit (110);
a cooling pipe (41) that passes refrigerant;
a cooling unit (R) that cools the power storage unit (110) with the refrigerant;
an accommodation case (90) that includes an upper case (91) and a lower case (92) disposed below the upper case (91) and accommodates the power storage unit (110); and
a securing member (70) that is secured to the lower case (92) and secures the power storage unit (110),
the securing member (70) having a pipe insertion port (76) that receives the cooling pipe (41) and a unit insertion port (75) that receives the cooling unit (R),
the securing member (70) internally having a channel (750) that passes the refrigerant,
the channel (750) interconnecting the pipe insertion port (76) and the unit insertion port (75).

2. The power storage device according to claim 1, wherein
the power storage unit (110) includes a power storage module (10),
the power storage module (10) includes a lower module (1) and an upper module (2) disposed above the lower module (1), and
the cooling unit (R) is disposed between the lower module (1) and the upper module (2).

3. The power storage device according to claim 2, wherein the securing member (70) couples the lower module (1) and the upper module (2) together.

4. The power storage device according to claim 1, wherein
the power storage unit (110) includes a first power storage module (10a) and a second power storage module (10b) horizontally adjacent to the first power storage module (10a),
the cooling unit (R) includes a first cooler (30a) that cools the first power storage module (10a) with the refrigerant, and a second cooler (30b) that cools the second power storage module (10b) with the refrigerant,
the unit insertion port (75) includes a first insertion port (75a) that receives the first cooler (30a) and a second insertion port (75b) that receives the second cooler (30b), and
the channel (750) includes a first channel (751) that interconnects the pipe insertion port (76) and the first insertion port (75a), and a second channel (752) that branches from the first channel (751) at a branching point (P1) located on the first channel (751) and interconnects the branching point (P1) and the second insertion port (75b).

5. The power storage device according to claim 4, wherein
the first power storage module (10a) includes a first lower module and a first upper module disposed above the first lower module,
the second power storage module (10b) includes a second lower module and a second upper module disposed above the second lower module,
the first cooler (30a) is disposed between the first lower module and the first upper module, and
the second cooler (30b) is disposed between the second lower module and the second upper module.

6. The power storage device according to claim 5, wherein the securing member (70) couples the first lower module and the first upper module together and couples the second lower module and the second upper module together.

7. The power storage device according to any one of claims 1 to 6, wherein the cooling unit (R) is welded to the securing member (70).
